# EUROPÄISCHE PATENTSCHRIFT

(11) **EP 1 116 626 B1**
(45) Veröffentlichungstag und Bekanntmachung des Hinweises auf die Patenterteilung: **05.11.2003**
(21) Anmeldenummer: 00128161.7
(22) Anmeldetag: 21.12.2000
(51) Int. Cl.: B60N 2/30

(54) **Flurförderzeug mit einem Klappsitz**
Conveyor with tip-up seat
Convoyeur avec strapontin

(30) Priorität: 10.01.2000 DE 10000622
(43) Veröffentlichungstag der Anmeldung: 18.07.2001
(73) Patentinhaber: Still Wagner GmbH & Co. KG, 72760 Reutlingen (DE)
(72) Erfinder: Marquart, Jürgen, Dipl.-Ing., 75331 Engelsbrand (DE); Prinz, Eugen, 72762 Reutlingen (DE)
(74) Vertreter: Kasseckert, Rainer

(56) Entgegenhaltungen:
- WO-A-99/10270
- DE-U- 29 902 139

## Beschreibung

Die Erfindung betrifft ein Flurförderzeug mit einem als Klappsitz ausgeführten Fahrersitz, wobei der Fahrersitz eine klappbares Sitzelement aufweist und wobei das Sitzelement in einer ersten Stellung eine Sitzfläche für einen sitzenden Fahrer darstellt und das Sitzelement in einer zweiten Stellung eine Lehnfläche für einen stehenden Fahrer darstellt.

Flurförderzeuge der eingangs genannten Bauart können von dem Fahrer wahlweise in sitzender oder stehender Körperhaltung bedient werden. Häufig sind hierbei Fahrersitze mit einem klappbaren Sitzelement vorgesehen. In der ersten Stellung bildet das Sitzelement eine annähernd waagrecht angeordnete Sitzfläche. Gemeinsam mit einer hinter der Sitzfläche angeordneten Rückenlehne ergibt sich eine einem herkömmlichen Sitz entsprechende Anordnung. Wenn das Sitzelement sich in seiner zweiten Stellung befindet, stellt es eine Lehnfläche dar, an der sich ein stehender Fahrer anlehnen kann. Eine derartige Anordnung ist beispielsweise aus der DE 299 02 139 U1 bekannt.

Bei bekannten Flurförderzeugen der eingangs genannten Art ist die Lehnfläche häufig von einer gepolsterten flachen Unterseite einer klappbaren Sitzfläche gebildet. Eine solche Anordnung weist den ergonomischen Nachteil auf, daß trotz der Polsterung das die Lehnfläche berührende Körperteil des Fahrers punktförmig belastet wird.

Der Erfindung liegt daher die Aufgabe zugrunde, ein ergonomisch verbessertes Flurförderzeug mit einem Fahrersitz der eingangs genannten Art zur Verfügung zu stellen.

Diese Aufgabe wird erfindungsgemäß dadurch gelöst, daß die Lehnfläche zumindest abschnittsweise eine konkave Form aufweist. Vorzugsweise ist die Lehnfläche (bei Ansicht im Querschnitt) vollständig konkav geformt und weist allenfalls im oberen und unteren Endbereich einen flachen Abschnitt auf. Die konkave Formgebung ermöglicht, daß der Körper des stehenden Fahrers die Lehnfläche flächig berührt. Hierbei wird der Körper des Fahrers insbesondere im unteren Rückenbereich und im Gesäßbereich von der Lehnfläche abgestützt. Die konkave Formgebung gewährleistet, daß die Lehnfläche an dem Körper des Fahrers flächig anliegt, was eine ergonomische Verbesserung gegenüber dem Stand der Technik bedeutet. Auch das subjektive Komfortempfinden des Fahrers wird durch die erfindungsgemäße Formgebung verbessert.

Weiterhin ist es zweckmäßig, wenn zumindest ein Abschnitt der Lehnfläche in der zweiten Stellung des Sitzelements nach vorne, unten geneigt ist. Vorzugsweise ist die gesamte Lehnfläche nach unten geneigt und weist allenfalls im oberen und unteren Endbereich einen senkrechten bzw. waagrechten Abschnitt auf. Die geneigte Lehnfläche ermöglicht es dem Fahrer, einen Teil seiner Gewichtskraft auf der Lehnfläche abzustützen, verhindert jedoch zugleich, daß sich der Fahrer auf die Lehnfläche setzt Mit der erfindungsgemäßen Anordnung kann der Fahrer somit im Stehen seine Beine entlasten.

In einer vorteilhaften Ausgestaltung ist der Fahrersitz höhenverstellbar an einem Rahmen des Flurförderzeugs befestigt. Es ist somit die Höhe des gesamten Fahrersitzes einschließlich des klappbaren Sitzelements einstellbar, womit der Fahrersitz an die Körpergröße des Fahrers angepaßt werden kann. Zweckmäßig ist sowohl eine Höheneinstellung der Lehnfläche für den stehenden Fahrer, als auch eine Höheneinstellung der Sitzfläche für den sitzenden Fahrer.

Eine besonders vorteilhafte Weiterbildung der Erfindung liegt vor, wenn zur Höheneinstellung des Fahrersitzes eine Gasfeder vorgesehen ist. Die Gasfeder ist während des Betriebs des Flurförderzeugs federnd blockiert, d.h. die Höhe des Fahrersitzes ist durch die Gasfeder in einem begrenzten Federbereich festgelegt. Bei Betätigung eines Betätigungselements der Gasfeder wird diese Blockierung aufgehoben, wobei von der Gasfeder auf den Fahrersitz eine nach oben gerichtete Stellkraft ausgeübt wird, die jedoch von dem Fahrer mit dessen Gewichtskraft überwindbar ist.

Eine andere vorteilhafte Weiterbildung der Erfindung besteht darin, daß das Flurförderzeug eine höhenverstellbare Bodenplatte aufweist Die Position der Bodenplatte, auf welcher der Fahrer mit den Füßen steht, kann hierbei an die jeweilige Betriebssituation angepaßt werden. Insbesondere ist eine unterschiedliche Höhe der Bodenplatte zweckmäßig, abhängig davon, ob der Fahrer auf der Sitzfläche sitzt oder an der erfindungsgemäßen Lehnfläche lehnt.

Zweckmäßigerweise ist auch zur Höheneinstellung der Bodenplatte eine Gasfeder vorgesehen. Neben der Möglichkeit zur Höheneinstellung bietet die Gasfeder gleichzeitig eine Dämpfung der Bodenplatte, wodurch beispielsweise beim Fahren über Bodenunebenheiten auftretende Schläge nur gedämpft auf den Fahrer übertragen werden.

Weitere Vorteile und Einzelheiten der Erfindung werden anhand des in den schematischen Figuren dargestellten Ausführungsbeispiels näher erläutert. Dabei zeigt
- Figur 1: einen Fahrersitz in Seitenansicht,
- Figur 2: ein erfindungsgemäßes Flurförderzeug mit stehendem Fahrer,
- Figur 3: ein erfindungsgemäßes Flurförderzeug mit sitzendem Fahrer.

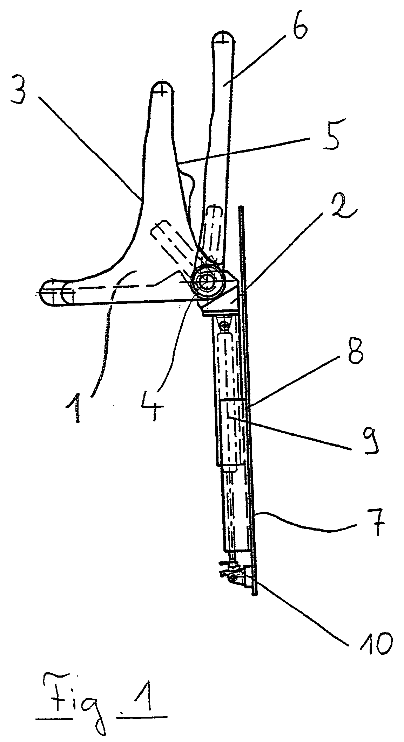

Figur 1 zeigt einen Fahrersitz eines erfindungsgemäßen Flurförderzeugs mit einem Sitzelement 1, das schwenkbar und arretierbar an einer Halterung 2 befestigt ist. In der dargestellten Position stellt das Sitzelement 1 eine Lehnfläche 3 für einen stehenden Fahrer dar. Das Sitzelement 1 kann um die Achse 4 entgegen des Uhrzeigersinns nach unten geschwenkt werden, wobei das Sitzelement 1 dann eine Sitzfläche 5 für einen sitzenden Fahrer bildet. Für den sitzenden Fahrer ist darüber hinaus eine Rückenlehne 6 vorgesehen.

Der gesamte Fahrersitz ist relativ zu einem fahrzeugfesten Bauteil 7 in der Höhe einstellbar, wofür eine Teleskopführung 8 vorgesehen ist. Die Teleskopführung 8 ist einerseits an dem fahrzeugfesten Bauteil 7, andererseits an der Halterung 2 befestigt. Die Höhe des Fahrersitzes wird mittels einer Gasfeder 9 festgelegt, die ebenfalls zwischen dem fahrzeugfesten Bauteil 7 und der Halterung 2 angeordnet ist. Während des Betriebs des Flurförderzeugs kann die Federwirkung der Gasfeder 9 genutzt werden, wodurch der Fahrersitz in vertikaler Richtung gefedert und gedämpft ist. Die Gasfeder 9 weist ein Betätigungselement 10 auf, mit dem die Blockierung der Gasfeder 9 aufgehoben werden kann. Die Gasfeder 9 übt dann auf die Halterung 2 eine nach oben gerichtete Kraft auf, die ausreicht, die Teleskopführung 8 nach oben auszufahren und dabei den Fahrersitz nach oben zu bewegen. Bei betätigtem Betätigungselement 10 kann andererseits durch Aufbringen einer äußeren Kraft die Gasfeder 9 komprimiert und damit der Fahrersitz in der Teleskopführung 8 nach unten bewegt werden.

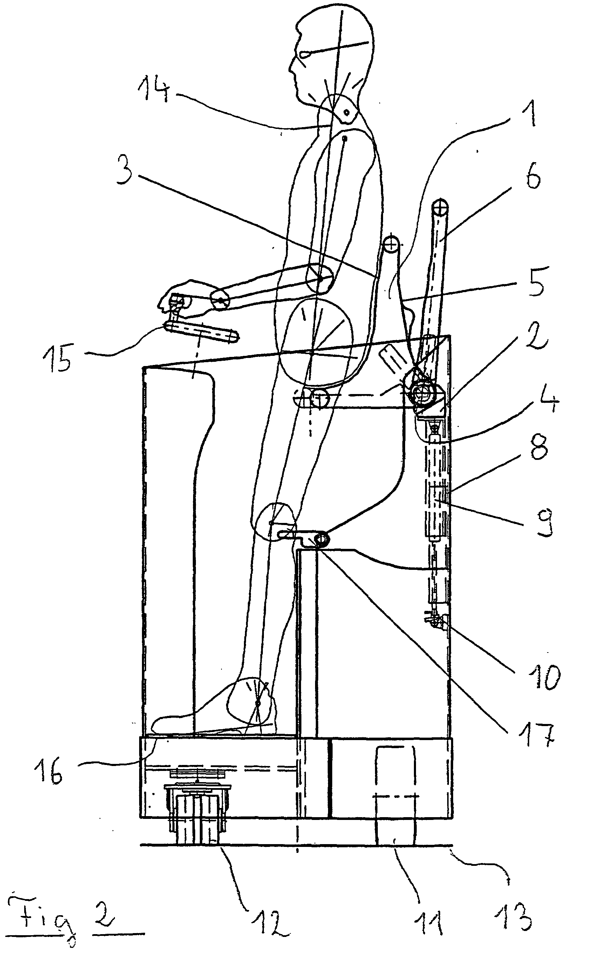

Figur 2 zeigt einen Fahrerplatz eines erfindungsgemäßen Flurförderzeugs mit einem Fahrersitz gemäß Fig. 1. Unterhalb des Fahrerplatzes sind ein lenkbares Antriebsrad 11 und eine Schwenkrolle 12 angeordnet, die auf einer Fahrbahnoberfläche 13 aufstehen. Der Fahrerplatz ist derart ausgerichtet, daß der Fahrer 14 quer zur Hauptfahrtrichtung des Flurförderzeugs orientiert ist, wenn er sich an die Lehnfläche 3 des Sitzelements 1 anlehnt. Ein Lenkrad 15 und weitere, nicht dargestellte Bedienelemente des Flurförderzeugs sind dann für die Bedienperson ergonomisch günstig erreichbar. Die erfindungsgemäß konkav gestaltete Lehnfläche 3 unterstützt den Körper des Fahrers großflächig. Die nach vorne, unten geneigte Ausrichtung der Lehnfläche 3 ermöglicht es dem Fahrer 14, einen Teil seiner Gewichtskraft an dem Sitzelement 1 abzustützen und damit seine Beine zu entlasten. Unabhängig von dem Fahrersitz kann eine Bodenplatte 16 des Flurförderzeugs in vertikaler Richtung verstellt werden. Hierzu kann mit einem Betätigungselement 17 die Bodenplatte 16 entriegelt und mit Unterstützung einer nicht dargestellten Gasfeder verstellt werden.

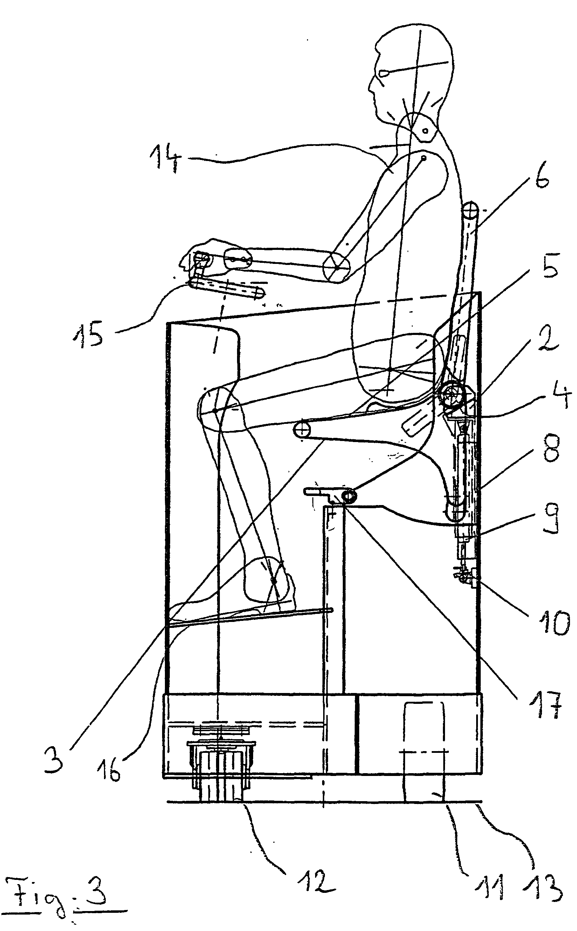

Figur 3 zeigt das Flurförderzeug gemäß Figur 2 mit einem auf der Sitzfläche 5 sitzenden Fahrer. Hierbei ist das Sitzelement nach unten geklappt. Der Rücken des Fahrers 14 ist an die Rückenlehne 6 angelehnt. Die Bodenplatte 16 ist in eine erhöhte Position verstellt, so daß sie sich gegenüber der Sitzfläche 5 in einer ergonomisch günstigen Position befindet.

Die Achse 4 des Sitzelements 1 ist vorteilhafterweise so angeordnet, daß nach einem Umklappen des Sitzelements 1 die Sitzfläche 5 bzw. die Lehnfläche 3 sich automatisch in der ergonomisch richtigen Position relativ zu dem Lenkrad 15 befinden. Die Höhe des Fahrersitzes muß also nach einem Umklappen des Sitzelements 1 nicht nachgestellt werden, solange der selbe Fahrer das Flurförderzeug bedient. Nach einem Umklappen des Sitzelements ist lediglich ein entsprechendes Einstellen der Bodenplatte 16 erforderlich.

## Patentansprüche

1. Flurförderzeug mit einem als Klappsitz ausgeführten Fahrersitz, wobei der Fahrersitz ein klappbares Sitzelement (1) aufweist und wobei das Sitzelement (1) in einer ersten Stellung eine Sitzfläche (5) für einen sitzenden Fahrer (14) darstellt und das Sitzelement (1) in einer zweiten Stellung eine Lehnfläche (3) für einen stehenden Fahrer (14) darstellt, **dadurch gekennzeichnet, daß** die Lehnfläche (3) zumindest abschnittsweise eine konkave Form aufweist.

2. Flurförderzeug nach Anspruch 1, **dadurch gekennzeichnet, daß** zumindest ein Abschnitt der Lehnfläche (3) in der zweiten Stellung des Sitzelements (1) nach vorne, unten geneigt.

3. Flurförderzeug nach Anspruch 1 oder 2, **dadurch gekennzeichnet, daß** der Fahrersitz höhenverstellbar an einem Rahmen des Flurförderzeugs befestigt ist.

4. Flurförderzeug nach Anspruch 3, **dadurch gekennzeichnet, daß** zur Höheneinstellung des Fahrersitzes eine Gasfeder (9) vorgesehen ist.

5. Flurförderzeug nach einem der Ansprüche 1 bis 4, **dadurch gekennzeichnet, daß** das Flurförderzeug eine höhenverstellbare Bodenplatte (16) aufweist.

6. Flurförderzeug nach Anspruch 5, **dadurch gekennzeichnet, daß** zur Höheneinstellung der Bodenplatte (16) eine Gasfeder (9) vorgesehen ist.

## Claims

1. Industrial truck with a driver's seat designed as a tip-up seat, the driver's seat having a tip-up seat element (1) and the seat element (1) representing a seating area (5) for a seated driver (14) when in a first position, and the seat element (1) representing a leaning area (3) for a standing driver (14) when in a second position, **characterized in that** the leaning area (3) has a concave shape, at least in some sections.

2. Industrial truck according to Claim 1, **characterized in that**, in the second position of the seat element (1), at least one section of the leaning area (3) is inclined forwards at the bottom.

3. Industrial truck according to Claim 1 or 2, **characterized in that** the driver's seat is fixed to a frame of the industrial truck such that its height can be adjusted.

4. Industrial truck according to Claim 3, **characterized in that** a gas spring (9) is provided for the height adjustment of the driver's seat.

5. Industrial truck according to one of Claims 1 to 4, **characterized in that** the industrial truck has an adjustable-height floor plate (16).

6. Industrial truck according to Claim 5, **characterized in that** a gas spring (9) is provided for the height adjustment of the floor plate (16).

## Revendications

1. Chariot de manutention avec un siège de conducteur réalisé sous la forme d'un strapontin, dans lequel le siège du conducteur présente un élément de siège rabattable (1) et dans lequel l'élément de siège (1) constitue, dans une première position, une surface de siège (5) pour un conducteur assis (14), et l'élément de siège (1) constitue, dans une deuxième position une surface de dossier (3) pour un conducteur debout (14), **caractérisé en ce que** la surface de dossier (3) présente au moins partiellement une forme concave.

2. Chariot de manutention selon la revendication 1, **caractérisé en ce qu'**au moins une portion de la surface de dossier (3) est inclinée vers l'avant et vers le bas dans la deuxième position de l'élément de siège (1).

3. Chariot de manutention selon la revendication 1 ou 2, **caractérisé en ce que** le siège du conducteur est fixé de manière réglable en hauteur sur un cadre du chariot de manutention.

4. Chariot de manutention selon la revendication 3, **caractérisé en ce que** l'on prévoit un ressort pneumatique (9) pour le réglage en hauteur du siège du conducteur.

5. Chariot de manutention selon l'une quelconque des revendications 1 à 4, **caractérisé en ce que** le chariot de manutention présente une plaque de sol (16) réglable en hauteur.

6. Chariot de manutention selon la revendication 5, **caractérisé en ce que** l'on prévoit un ressort pneumatique (9) pour l'ajustement en hauteur de la plaque de sol (16).
